# EUROPEAN PATENT APPLICATION

(11) **EP 4 439 227 A1**
(43) Date of publication of application: **02.10.2024**
(21) Application number: 24164819.5
(22) Date of filing: 20.03.2024
(51) Int. Cl.: G06F 1/08, G06F 1/324, G06F 1/3287, G06F 1/3296, G06F 1/3206

(54) **SEMICONDUCTOR DEVICE FOR SHARED RESOURCE MANAGEMENT**

(30) Priority: 24.03.2023 KR 20230039106; 07.04.2023 KR 20230046282
(71) Applicant: Samsung Electronics Co., Ltd., Suwon-si, Gyeonggi-do 16677 (KR)
(72) Inventor: SHON, Yooseok, 16677 Suwon-si (KR); LEE, Jongjin, 16677 Suwon-si (KR); KIM, Seongho, 16677 Suwon-si (KR)
(74) Representative: Marks & Clerk LLP

(57) **Abstract**

A semiconductor system includes a shared resource management circuit configured to provide a shared resource having a level adjusted according to a setting level, a plurality of intellectual property (IP) blocks each including at least one core configured to execute an instruction and configured to generate separate, respective control signals of a plurality of control signals, plurality of control signals including separate, respective setting levels of a plurality of setting levels, and a logic circuit including a plurality of slots configured to respectively store the plurality of setting levels respectively included in the plurality of control signals respectively received from the plurality of IP blocks, the logic circuit being configured to select a target setting level from among the plurality of setting levels and transmit, to the shared resource management circuit, a target control signal including the target setting level.

## Description

### BACKGROUND

The inventive concepts relate to semiconductor devices, and more particularly, to semiconductor devices including a plurality of intellectual property (IP) blocks with optimized shared resources, and semiconductor systems including one or more of the semiconductor devices.

Various resources that are shared by a plurality of IP blocks may exist in a semiconductor device. For example, transactions that are output by a plurality of IP blocks may be received by a slave device in synchronization with a clock signal. In addition, a plurality of IP blocks may share a power supply voltage provided by a power management integrated circuit (PMIC). That is, a clock signal provided to a slave device or a power supply voltage provided to a semiconductor device is an example of a resource that may be shared by a plurality of IP blocks.

### SUMMARY

Some example embodiments of the inventive concepts relate to a semiconductor device capable of solving a bottleneck phenomenon of control signals of a plurality of intellectual property (IP) blocks capable of adjusting a level of a shared resource, and provide a semiconductor device capable of selecting a target control signal according to priority. An IP block may for example be a unit and/or functional block of the semiconductor device, having a given functionality, for example being configured to execute instructions. Some example embodiments of the inventive concepts provide a semiconductor system including the semiconductor device.

According to some example embodiments of the inventive concepts, a semiconductor system may include a shared resource management circuit, a plurality of intellectual property (IP) blocks, and a logic circuit. The shared resource management circuit may be configured to provide a shared resource having a level adjusted according to a setting level. The plurality of intellectual property (IP) blocks may each include at least one core configured to execute an instruction. The plurality of IP blocks may be configured to generate separate, respective control signals of a plurality of control signals, plurality of control signals including separate, respective setting levels of a plurality of setting level. The logic circuit may include a plurality of slots configured to respectively store the plurality of setting levels respectively included in the plurality of control signals respectively received from the plurality of IP blocks. The logic circuit may be configured to select a target setting level from among the plurality of setting levels and transmit, to the shared resource management circuit, a target control signal including the target setting level, to cause the shared resource management circuit to provide the shared resource adjusted according to the target setting level.

According to some example embodiments of the inventive concepts, a semiconductor system may include a shared resource management circuit configured to provide a shared resource including a clock signal or a power supply voltage, the shared resource adjusted according to a target setting level, a first intellectual property (IP) block configured to perform a first bus operation on a bus in synchronization with a first clock signal gated based on a first clock gating signal, perform power gating on the power supply voltage according to a first power gating signal, and generate a first control signal including a first setting level, a second IP block configured to perform a second bus operation on the bus in synchronization with a second clock signal gated based on a second clock gating signal, perform power gating on the power supply voltage according to a second power gating signal, and generate a second control signal including a second setting level, a third IP block configured to perform a third bus operation on the bus in synchronization with a third clock signal gated based on a third clock gating signal, perform power gating on the power supply voltage according to a third power gating signal, and generate a third control signal including a third setting level, and a logic circuit configured to select, according to a selection criterion, the target setting level from among the first to third setting levels included in the first to third control signals, the first to third setting levels respectively stored in first to third slots, and transmit a target control signal including the target setting level to the shared resource management circuit, to cause the shared resource management circuit to provide the shared resource adjusted according to the target setting level. The third IP block may be further configured to generate information associated with the selection criterion based on idle information associated with the first to third IP blocks that are generated based on at least one of signals for the first to third bus operations, the first to third clock gating signals, or the first to third power gating signals.

According to some example embodiments of the inventive concepts, a system-on-chip may include a shared clock management circuit configured to provide a clock signal adjusted according to a setting level, a controller configured to receive data from a bus based on the clock signal, a plurality of clock management circuits each configured to provide a separate clock signal gated based on a separate clock gating signal, a plurality of intellectual property (IP) blocks each configured to provide data to the bus based on a corresponding clock signal received from a corresponding clock management circuit from among the plurality of clock management circuits, the plurality of IP blocks configured to generate separate, respective control signals of a plurality of control signals, plurality of control signals including separate, respective setting levels of a plurality of setting levels, and a logic circuit configured to select a target setting level from among the plurality of setting levels respectively included in the plurality of control signals respectively received from the plurality of IP blocks and transmit, to the shared clock management circuit, a target control signal including the target setting level, to cause the shared clock management circuit to provide the clock signal adjusted according to the target setting level.

According to some example embodiments of the inventive concepts, a semiconductor system may include a power management integrated circuit configured to generate a power supply voltage, a shared power management circuit configured to adjust a level of the power supply voltage according to a setting level, a plurality of power management circuits each configured to provide a separate power gating signal, a plurality of intellectual property (IP) blocks each configured to receive the power supply voltage, perform power gating on the power supply voltage based on a corresponding power gating signal received from a corresponding power management circuit from among the plurality of power management circuits, and generate a separate control signal, the separate control signal including a separate setting level, and a logic circuit configured to select a target setting level from among a plurality of setting levels respectively included in a plurality of control signals respectively received from the plurality of IP blocks and transmit, to the shared power management circuit, a target control signal including the target setting level, to cause the shared power management circuit to provide the power supply voltage adjusted according to the target setting level.

### BRIEF DESCRIPTION OF THE DRAWINGS

Example embodiments will be more clearly understood from the following detailed description taken in conjunction with the accompanying drawings in which:
FIG. 1 is a block diagram of a semiconductor system according to some example embodiments;
FIG. 2 is a block diagram of a shared logic circuit according to some example embodiments;
FIG. 3 is a diagram for describing a semiconductor system according to some example embodiments;
FIG. 4 is a diagram for describing a semiconductor system according to some example embodiments;
FIG. 5 is a block diagram of a semiconductor system according to some example embodiments;
FIG. 6 is a block diagram of a semiconductor system according to some example embodiments;
FIG. 7 is a diagram for describing a clock gating cell according to some example embodiments;
FIG. 8 is a diagram for describing a power gating operation of a first intellectual property (IP) block, according to some example embodiments;
FIG. 9 is a timing diagram for describing a method of selecting a target setting level, according to some example embodiments;
FIG. 10 is a timing diagram for describing a method of selecting a target setting level, according to some example embodiments;
FIG. 11 is a timing diagram for describing a method of generating a first idle signal, according to some example embodiments; and
FIG. 12 is a timing diagram for describing a method of generating a first idle signal, according to some example embodiments.

### DETAILED DESCRIPTION

Hereinafter, various example embodiments of the inventive concepts will be described with reference to the accompanying drawings.

As described herein, when an operation is described to be performed, or an effect such as a structure is described to be established "by" or "through" performing additional operations, it will be understood that the operation may be performed and/or the effect/structure may be established "based on" the additional operations, which may include performing said additional operations alone or in combination with other further additional operations.

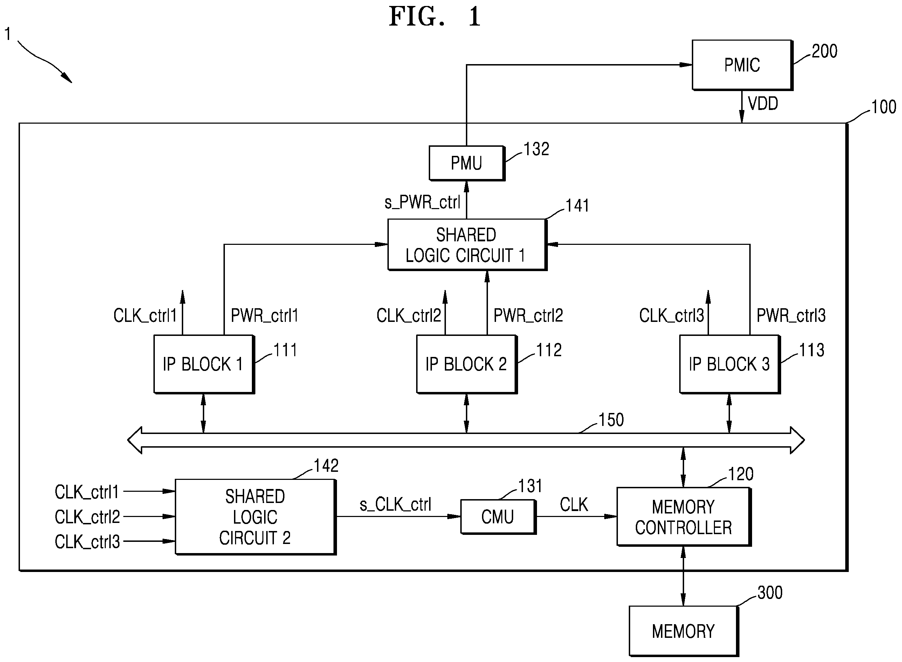

FIG. 1 is a block diagram of a semiconductor system 1 according to some example embodiments.

Referring to FIG. 1, the semiconductor system 1 may include a semiconductor device 100, a power management integrated circuit (PMIC) 200, and a memory 300.

The semiconductor system 1 may be implemented as a personal computer (PC) or a mobile device. For example, the mobile device may be implemented as a laptop computer, a mobile phone, a smartphone, a tablet PC, a personal digital assistant (PDA), an enterprise digital assistant (EDA), a digital still camera, a digital video camera, a portable multimedia player (PMP), a personal navigation device or a portable navigation device (PND), a handheld game console, a mobile Internet device (MID), a wearable computer, an Internet of things (IoT) device, an Internet of everything (IoE) device, a drone, or an e-book, but the inventive concepts are not limited thereto.

The semiconductor device 100 may control operations of the PMIC 200 and the memory 300. The semiconductor device 100 may be implemented as an integrated circuit (IC), a motherboard, a system-on-chip (SoC), a microprocessor, an application processor (AP), a mobile AP, a chipset, or a set of semiconductor chips, but the inventive concepts are not limited thereto.

The semiconductor device 100 may include first to third intellectual property (IP) blocks 111 to 113, a memory controller 120, a clock management unit (CMU) 131, a power management unit (PMU) 132, and first and second shared logic circuits 141 and 142.

The first to third IP blocks 111 to 113 and the memory controller 120 may exchange data with each other through a bus 150. The bus 150 may be implemented as an advanced microcontroller bus architecture (AMBA), an advanced high-performance bus (AHB), an advanced peripheral bus (APB), an advanced eXtensible interface (AXI), an advanced system bus (ASB), an AXI coherency extensions (ACE), or any combination thereof, but the inventive concepts are not limited thereto. In some example embodiments, at least some components in the semiconductor device 100 may exchange data with each other through the bus 150.

The first to third IP blocks 111 to 113 are function blocks that perform specific functions. An IP block as described herein, including for example the first to third IP blocks 111 to 113, may refer to a function block, for example processing circuitry such as a central processing unit (CPU), a graphics processing unit (GPU), a neural network processor, a neural processing unit (NPU), a communication processor (CP), a digital signal processor (DSP), a video module (e.g., a camera interface), a Joint Photographic Experts Group (JPEG) processor, a video processor, or a mixer, etc.), a 3-dimensional graphics core, an audio system, or a driver. At least one of the first to third IP blocks 111 to 113 may include at least one core (e.g., at least one processing circuitry core, processor core, processing core, or the like) that executes instructions, but example embodiments are not limited thereto. While FIG. 1 illustrates the semiconductor device including three IP blocks, the number (e.g., quantity) of IP blocks included in the semiconductor device 100 is not limited thereto, and N IP blocks (where N is a natural number) may be included in the semiconductor device 100.

The memory controller 120 may perform a bus operation on the bus 150 based on a clock signal CLK provided from the CMU 131. Specifically, the memory controller 120 may obtain a command, an address, or data from the bus 150 in synchronization with the clock signal CLK, or may provide a command, an address, or data to the bus 150 in synchronization with the clock signal CLK. The memory controller 120 may access the memory 300 based on the command, the address, or the data provided from the bus 150. The memory 300 may be a volatile memory, such as random access memory (RAM), dynamic RAM (DRAM), or static RAM (SRAM). The memory 300 may be a non-volatile memory, such as a flash memory.

The CMU 131 may generate the clock signal CLK based on a clock control signal s_CLK_ctrl. The clock control signal s_CLK_ctrl may include a frequency setting level (e.g., frequency setting magnitude). The CMU 131 may adjust the frequency of the clock signal CLK so that the clock signal CLK has the frequency setting level. The clock signal CLK may be referred to as a shared resource. The CMU 131 may be referred to as a shared resource management circuit configured to provide a shared resource (e.g., the clock signal CLK) having a level (e.g., a frequency) adjusted according to a setting level (e.g., a frequency setting level).

The first to third IP blocks 111 to 113 may respectively generate first to third clock control signals CLK_ctrl1 to CLK_ctrl3 for controlling the frequency level of the clock signal CLK. Specifically, the first IP block 111 may generate the first clock control signal CLK_ctrl1 for controlling the frequency level (e.g., frequency magnitude) of the clock signal CLK to a first setting level (e.g., a first setting magnitude), the second IP block 112 may generate the second clock control signal CLK_ctrl2 for controlling the frequency level of the clock signal CLK to a second setting level, and the third IP block 113 may generate the third clock control signal CLK_ctrl1 for controlling the frequency level of the clock signal CLK to a third setting level. The first to third clock control signals CLK_ctrl1 to CLK_ctrl3 may each include a respective setting level. As a result, the first to third IP blocks 111 to 113 may be understood to be configured to generate separate, respective clock control signals of the first to third clock control signals CLK_ctrl1 to CLK_ctrl3 that include separate, respective setting levels of first to third of setting levels (e.g., frequency setting levels). It will be understood that a control signal that is described herein to "include" a setting level may "indicate" the setting level.

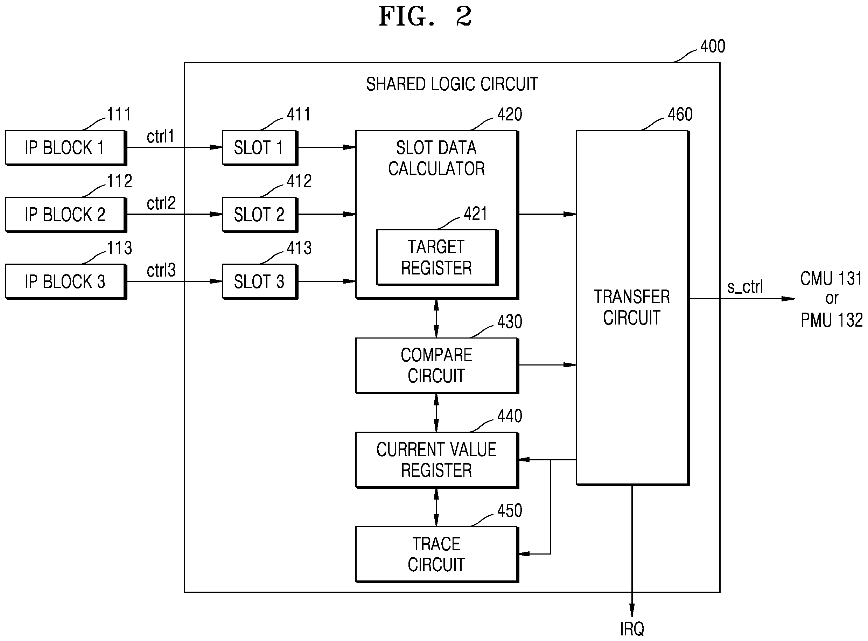

The second shared logic circuit 142 may select the clock control signal s_CLK_ctrl from among the first to third clock control signals CLK_ctrl1 to CLK_ctrl3 to thereby select a target setting level from among the first to third setting levels and provide (e.g., output, transmit, etc.) the selected clock control signal s_CLK_ctrl to the CMU 131 to cause the CMU 131 to provide the clock signal CLK adjusted according to the target setting level. The selected clock control signal s_CLK_ctrl may be referred to as a target clock control signal or a target control signal. The second shared logic circuit 142 may select the clock control signal s_CLK_ctrl based on information about (e.g., information associated with) a selection criterion. When the frequency level of the clock signal CLK is changed according to the clock control signal s_CLK_ctrl, the frequency setting levels required by the first to third IP blocks 111 to 113 may be all satisfied. For example, the second shared logic circuit 142 may select a clock control signal having the highest setting level from among the first to third clock control signals CLK_ctrl1 to CLK_ctrl3. However, example embodiments are not limited to thereto. The second shared logic circuit 142 may be described in detail below with reference to FIG. 2.

The PMU 132 may control the PMIC 200 so that a power supply voltage VDD has a power setting level (e.g., power setting magnitude, voltage magnitude, etc.) included in a selected power control signal s_PWR_ctrl. The PMIC 200 may generate the power supply voltage VDD having the power setting level under the control of the PMU 132 and provide the generated power voltage VDD to the semiconductor device 100. The power supply voltage VDD may be referred to as a shared resource. The PMU 132 may be referred to as a shared resource management circuit configured to provide a shared resource (e.g., the power supply voltage VDD) having a level (e.g., a voltage magnitude) adjusted according to a setting level (e.g., a power setting level).

The first to third IP blocks 111 to 113 may operate based on the power supply voltage VDD. The first to third IP blocks 111 to 113 may respectively generate first to third power control signals PWR_ctrl1 to PWR_ctrl3 for controlling the voltage level (e.g., voltage magnitude) of the power supply voltage VDD. Specifically, the first IP block 111 may generate the first power control signal PWR_ctrl1 for controlling the voltage level of the power supply voltage VDD to a first setting level, the second IP block 112 may generate the second power control signal PWR_ctrl2 for controlling the voltage level of the power supply voltage VDD to a second setting level, and the third IP block 113 may generate the third power control signal PWR_ctrl3 for controlling the voltage level of the power supply voltage VDD to a third setting level. The first to third power control signals PWR_ctrl1 to PWR_ctrl3 may each include a respective setting level. As a result, the first to third IP blocks 111 to 113 may be understood to be configured to generate separate, respective power control signals of the first to third power control signals PWR_ctrl1 to PWR_ctrl3 that include separate, respective setting levels of first to third of setting levels (e.g., power setting levels).

The first shared logic circuit 141 may select the power control signal s_PWR_ctrl from among the first to third power control signals PWR_ctrl1 to PWR_ctrl3 to thereby select a target setting level from among the first to third setting levels and provide (e.g., output, transmit, etc.) the selected power control signal s_PWR_ctrl to the PMU 132 to cause the PMU 132 to provide the power supply voltage VDD adjusted according to the target setting level. The selected power control signal s_PWR_ctrl may be referred to as a target power control signal or a target control signal. The first shared logic circuit 141 may select the power control signal s_PWR_ctrl based on information about (e.g., information associated with) a selection criterion. When the voltage level (e.g., voltage magnitude) of the power supply voltage VDD is changed according to the power control signal s_PWR_ctrl, the voltage setting levels (e.g., voltage setting magnitudes, voltage magnitudes, etc.) required by the first to third IP blocks 111 to 113 may be all satisfied. That is, even when the voltage level of the power supply voltage VDD is changed, performance degradation of the first to third IP blocks 111 to 113 may not occur, may be reduced, or may be minimized. For example, the first shared logic circuit 141 may select the power control signal having the highest setting level from among the first to third power control signals PWR_ctrl1 to PWR_ctrl3. However, example embodiments are not limited to thereto. The first shared logic circuit 141 may be described in detail below with reference to FIG. 2.

According to some example embodiments, a control signal that does not cause performance degradation of the first to third IP blocks 111 to 113 or reduces or minimizes such performance degradation may be selected by a target control signal, and thus, performance of the first to third IP blocks 111 to 113 may be improved. As a result, functionality of the semiconductor device 100 and the semiconductor system 1 including same may be improved based on one or more of the first shared logic circuit 141 and/or the second shared logic circuit 142 causing a shared resource used by (e.g., provided to) the first to third IP blocks 111 to 113 being adjusted according to a target setting level from among the plurality of setting levels indicated by control signals generated by the first to third IP blocks 111 to 113, where the selected target setting level may be selected to cause all of the shared resource requirements of the first to third IP blocks 111 to 113 (e.g., setting levels required by the first to third IP blocks 111 to 113) to be satisfied. In addition, power consumption of the semiconductor system 1 may be improved based on adjusting the power supply voltage VDD to a level that satisfies all active IP blocks.

Furthermore, the CMU 131 or the PMU 132 may satisfy the setting level required by the first to third IP blocks 111 to 113 by communicating with the first or second shared logic circuit 141 or 142 that provides one target control signal. Accordingly, handshake delay caused by communication with all the first to third IP blocks 111 to 113 may be reduced, minimized, or prevented, and performance degradation due to handshake delay may be reduced, minimized, or prevented, based on the communication from the first or second shared logic circuit 141 or 142 to the CMU 131 or the PMU 132, respectively, including one target control signal instead of the plurality of control signals generated by the plurality of IP blocks. For example, target power control signal s_PWR_ctrl may be communicated to PMU 132 instead of the first to third power control signals PWR_ctrl1 to PWR_ctrl3, thereby reducing handshake delay and/or bottleneck delay and thus improving performance and functionality of the semiconductor device 100 and the semiconductor system 1 including same with regard to at least power consumption by the first to third IP blocks 111 to 113. In another example target clock control signal s_CLK_ctrl may be communicated to CMU 131 instead of the first to third clock control signals CLK_ctrl1 to CLK_ctrl3, thereby reducing handshake delay and/or bottleneck delay and thus improving performance and functionality of the semiconductor device 100 and the semiconductor system 1 including same with regard to at least performance of bus operations on the but 150 based on a clock signal CLK. In addition, implementation complexity of the CMU 131 or the PMU 132 caused by communication with all the first to third IP blocks 111 to 113 may be reduced or minimized, based on the communication from the first to third IP blocks 111 to 113 the CMU 131 or the PMU 132, respectively, including one selected target control signal provided by a shared resource logic circuit (e.g., the first or second shared logic circuit 141 or 142) instead of the plurality of control signals generated by the plurality of IP blocks.

Although only the clock signal CLK and the power supply voltage VDD have been described as the shared resources that are shared by the first to third IP blocks 111 to 113, example embodiments are not limited thereto. A shared logic circuit may be provided for shared resources that are shared by master IP blocks such as the first to third IP blocks 111 to 113. The shared logic circuit may select one of the levels (e.g., magnitudes, frequencies, etc.) of the shared resources requested by the first to third IP blocks 111 to 113 and adjust the level of the shared resource to the selected level.

FIG. 2 is a block diagram of a shared logic circuit 400 according to some example embodiments.

Referring to FIG. 2, the shared logic circuit 400 may be the first or second shared logic circuit 141 or 142 of FIG. 1. The shared logic circuit 400 may be referred to interchangeably herein as a "logic circuit." The shared logic circuit 400 may select a target control signal s_ctrl from among first to third control signals ctrl1 to ctrl3 and provide the target control signal s_ctrl to the CMU 131 or the PMU 132 to cause the CMU 131 or the PMU 132 to provide a shared resource (e.g., a clock signal CLK or a power supply voltage VDD, respectively) that is adjusted (e.g., has a level, magnitude, frequency, etc. that is adjusted) according to a target setting level included in (e.g. encoded within) the target control signal s_ctrl. The first to third control signals ctrl1 to ctrl3 may be respectively the first to third clock control signals CLK_ctrl1 to CLK_ctrl3 or the first to third power control signals PWR_ctrl1 to PWR_ctrl3.

The shared logic circuit 400 may include first to third slots 411 to 413, a slot data calculator 420, a compare circuit 430, a current value register 440, a trace circuit 450, and a transfer circuit 460.

The first to third slots 411 to 413 may store setting levels of shared resources included in (e.g. encoded within) the first to third control signals ctrl1 to ctrl3. Specifically, the first slot 411 may store a first setting level included in the first control signal ctrl1, the second slot 412 may store a second setting level included in the second control signal ctrl2, and the third slot 413 may store a third setting level included in the third control signal ctrl3. The first to third slots 411 to 413 may be respectively dedicated to the corresponding IP blocks. The first to third slots 411 to 413 may be understood to be configured to store separate, respective setting levels of the first to third setting levels included in separate, respective control signals of the plurality of control signals ctrl1 to ctrl3 generated by separate, respective IP blocks of the first to third IP blocks 111 to 113.

The slot data calculator 420 may receive the first to third setting levels from the first to third slots 411 to 413 and select a target setting level from among the first to third setting levels based on a selection criterion. The slot data calculator 420 may store the selected target setting level in a target register 421. The target setting level selected according to an example selection criterion may be a particular setting level that may be one of a highest setting level (e.g., from among the first to third setting levels received from the first to third slots 411 to 413), a lowest setting level (e.g., from among the first to third setting levels received from the first to third slots 411 to 413), a setting level with a reference value (e.g., from among the first to third setting levels received from the first to third slots 411 to 413), a setting level stored in a reference slot from among the first to third slots 411 to 413, or a setting level stored in one or more slots other than the reference slot among the first to third slots 411 to 413. The reference value or the reference slot may be included in the first to third control signals ctrl1 to ctrl3 or information (slot_sel) used as a selection criterion to be described below.

For example, when the setting level with the reference value according to the selection criterion becomes the target setting level, the slot data calculator 420 may select, as the target setting level, the same setting level as the reference value from among the setting levels of the first to third slots 411 to 413. In some example embodiments, when the target setting level is selected from among the setting levels stored in the slots other than the reference slot according to the selection criterion, the slot data calculator 420 may select, as the target setting level, the highest setting level from among the setting levels stored in the slots other than the reference slot. However, example embodiments are not limited to thereto.

The compare circuit 430 may compare the target setting level with the current level (e.g., current setting level) of the shared resource. The compare circuit 430 may output the target setting level when (e.g., in response to a determination that) the target setting level is different from the current level of the shared resource.

The current value register 440 (also referred to herein as a register) may store the current level (e.g., current setting level) of the shared resource. The current value register 440 may be updated whenever the target control signal s_ctrl is output. For example, the compare circuit 430 may update the current level stored in the current value register 440 in response to outputting the target setting level (e.g., when (e.g., in response to a determination that) the target setting level is different from the current level of the shared resource).

The trace circuit 450 may store a log for the level of the shared resource (e.g., the trace circuit 450 may store information associated with a log for the level of the shared resource). The trace circuit 450 may be updated whenever the target control signal s_ctrl is output (e.g., in response to a determination that the target control signal s_ctrl has been transmitted to a shared resource management circuit such as the CMU 131, the PMU 132, or the like).

The transfer circuit 460 may output (e.g., transmit), to the CMU 131 or the PMU 132, the target control signal s_ctrl including the target setting level. The transfer circuit 460 may output (e.g., transmit) an interrupt signal IRQ when the target control signal s_ctrl is output (e.g., concurrently with the target control signal s_ctrl being output, in response to a determination that the target control signal s_ctrl is output, etc.). The interrupt signal IRQ may indicate that only the shared logic circuit 400 is authorized to control the CMU 131 or the PMU 132. The interrupt signal IRQ may be configured to limit a control authority for the shared resource management circuit to which the target control signal s_ctrl is output (e.g., the CMU 131 or the PMU 132) to the shared logic circuit 400. Accordingly, the circuits receiving the interrupt signal IRQ may not output (e.g., may refrain from outputting) a request for controlling the CMU 131 or the PMU 132 (e.g., refrain from outputting such a request in response to receiving the interrupt signal IRQ).

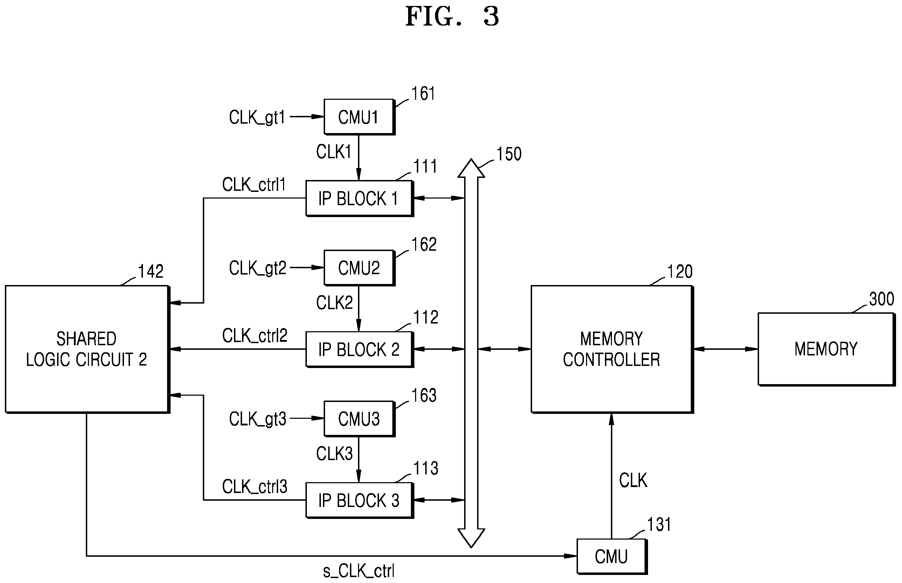

FIG. 3 is a diagram for describing a semiconductor system according to some example embodiments.

Details described above with reference to FIG. 1 may be omitted.

First to third IP blocks 111 to 113 may operate according to first to third clock signals CLK1 to CLK3, respectively. For example, the first IP block 111 may provide a request to a bus 150 in synchronization with the first clock signal CLK1 or perform a first bus operation of receiving a command from the bus 150. The second IP block 112 may provide a request to the bus 150 in synchronization with the second clock signal CLK2 or perform a second bus operation of receiving a command from the bus 150. The third IP block 113 may provide a request to the bus 150 in synchronization with the third clock signal CLK3 or perform a third bus operation of receiving a command from the bus 150.

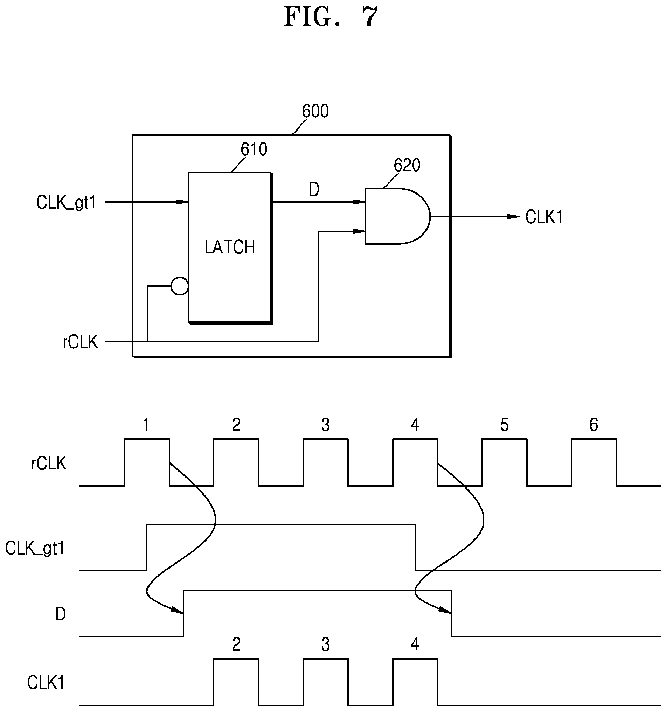

A first CMU 161 may provide, to the first IP block 111, the first clock signal CLK1 gated based on a first clock gating signal CLK_gt1. A second CMU 162 may provide, to the second IP block 112, the second clock signal CLK2 gated based on a second clock gating signal CLK_gt2. A third CMU 163 may provide, to the third IP block 113, the third clock signal CLK3 gated based on a third clock gating signal CLK_gt3. The clock gating operation may be described below with reference to FIG. 7.

The second shared logic circuit 142 may select the clock control signal s_CLK_ctrl from among the first to third clock control signals CLK_ctrl1 to CLK_ctrl3 according to the selection criterion and provide the clock control signal s_CLK_ctrl to the CMU 131. The CMU 131 may output a clock signal CLK having a frequency setting level according to the clock control signal s_CLK_ctrl. The CMU 131 may be referred to as a shared resource management circuit.

The memory controller 120 may receive a request from the bus 150 or provide a response to the bus 150, based on the clock signal CLK.

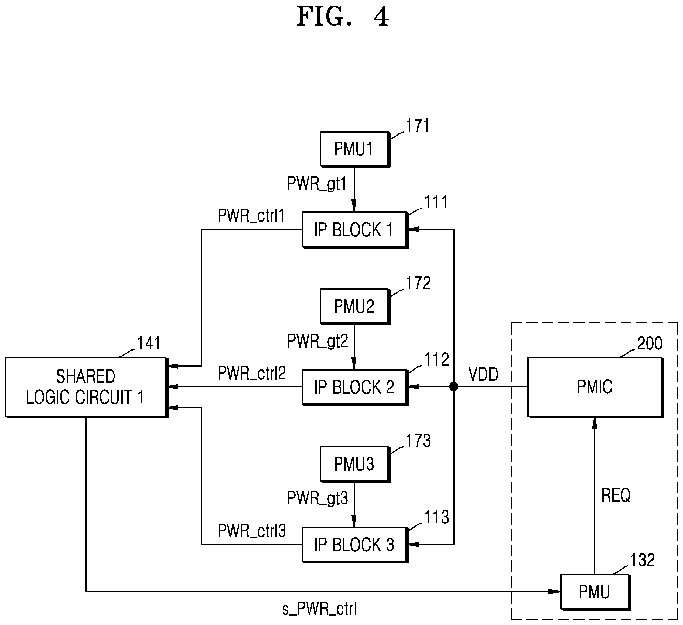

FIG. 4 is a diagram for describing a semiconductor system according to some example embodiments.

Details described above with reference to FIG. 1 may be omitted.

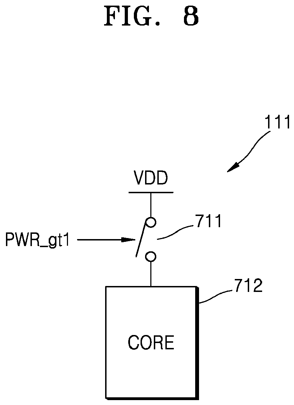

Referring to FIG. 4, first to third IP blocks 111 to 113 may receive a power supply voltage VDD in common and perform a power gating operation on the power supply voltage VDD according to first to third power gating signals PWR_gt1 to PWR_gt3. The power gating operation may be described below with reference to FIG. 8.

A first PMU 171 may provide the first power gating signal PWR_gt1 to the first IP block 111. The first PMU 171 may generate the first power gating signal PWR_gt1 under the control of the first IP block 111 or other IP blocks (e.g., a CPU). The second PMU 172 may provide the second power gating signal PWR_gt2 to the second IP block 112. The second PMU 172 may generate the second power gating signal PWR_gt2 under the control of the second IP block 112 or other IP blocks (e.g., a CPU). The third PMU 173 may provide the third power gating signal PWR_gt3 to the third IP block 113. The third PMU 173 may generate the third power gating signal PWR_gt3 under the control of the third IP block 113 or other IP blocks (e.g., a CPU).

A first shared logic circuit 141 may select a power control signal s_PWR_ctrl from among first to third power control signals PWR_ctrl1 to PWR_ctrl3 according to a selection criterion and may provide the power control signal s_PWR_ctrl to a PMU 132. The PMU 132 may control a PMIC 200 to output a power supply voltage VDD having a voltage setting level according to the power control signal s_PWR_ctrl. The PMU 132 and the PMIC 200 may be referred to as shared resource management circuits.

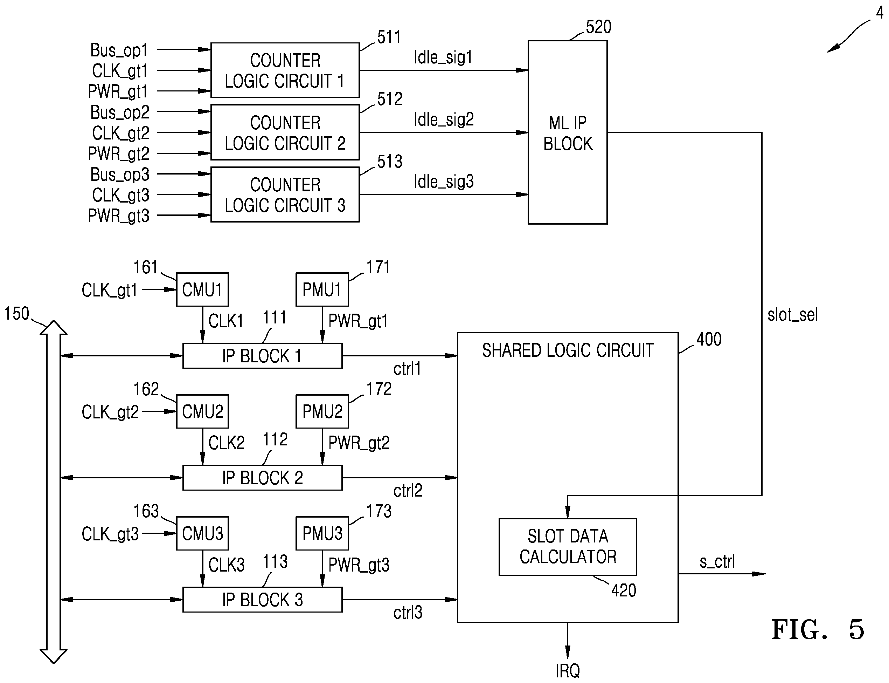

FIG. 5 is a block diagram of a semiconductor system 4 according to some example embodiments. Details described above with reference to FIGS. 1 to 4 may be omitted.

A first IP block 111 may perform a first bus operation on a bus 150, and a first bus operation signal Bus_op1 may be activated by the first bus operation. The first bus operation signal Bus_op1 may be in an active state (e.g., logic high) when the first bus operation is performed, and may be in an idle state (e.g., logic low) when the first bus operation is not performed. A second IP block 112 may perform a second bus operation on the bus 150, and a second bus operation signal Bus_op2 may be activated by the second bus operation. The second bus operation signal Bus_op2 may be in an active state (e.g., logic high) when the second bus operation is performed, and may be in an idle state (e.g., logic low) when the second bus operation is not performed. A third IP block 113 may perform a third bus operation on the bus 150, and a third bus operation signal Bus_op3 may be activated by the third bus operation. The third bus operation signal Bus_op3 may be in an active state (e.g., logic high) when the third bus operation is performed, and may be in an idle state (e.g., logic low) when the third bus operation is not performed. The semiconductor system 4 may further include a bus monitoring circuit that generates the first to third bus operation signals Bus_op1 to Bus_op3. Each of the bus operations signals may be understood to be associated with a separate bus operation and/or may be understood to indicate a state of the separate bus operation.

The semiconductor system 4 may include first to third counter logic circuits 511 to 513 and a machine learning (ML) IP block 520.

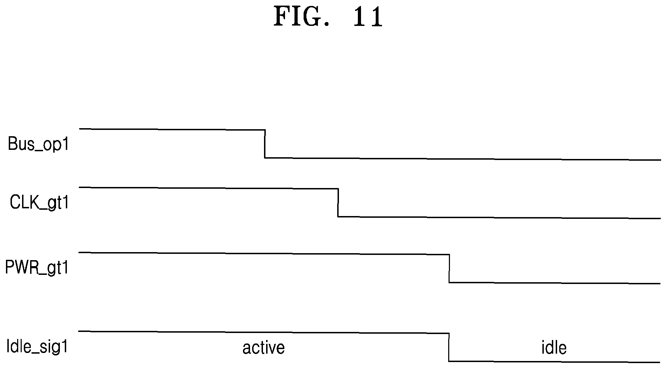

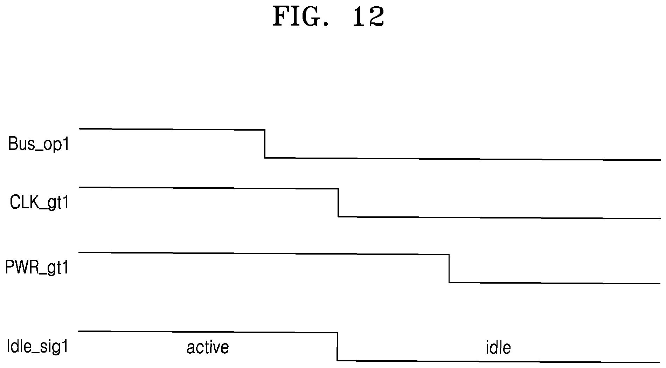

The first counter logic circuit 511 may generate a first idle signal idle_sig1 indicating the idle state of the first IP block 111, based on the first bus operation signal Bus_op1, a first clock gating signal CLK_gt1, and a first power gating signal PWR_gt1. The second counter logic circuit 512 may generate a second idle signal idle_sig2 indicating the idle state of the second IP block 112, based on the second bus operation signal Bus_op2, a second clock gating signal CLK_gt2, and a second power gating signal PWR_gt2. The third counter logic circuit 513 may generate a third idle signal idle_sig3 indicating the idle state of the third IP block 113, based on the third bus operation signal Bus_op3, a third clock gating signal CLK_gt3, and a third power gating signal PWR_gt3. The method of generating the first to third idle state signals idle_sig1 to idle_sig3 will be described in detail below with reference to FIGS. 11 and 12.

The ML IP block 520 may generate information slot_sel about (e.g., associated with) the selection criterion based on at least one of the first to third idle state signals idle_sig1 to idle_sig3. For example, when (e.g., in response to a determination that) the first idle signal idle_sig1 is in an idle state, the ML IP block 520 may determine that the first IP block 111 is in an idle state, and may generate the information slot_sel about the selection criterion so that the target setting level is selected from among the setting levels of the second and third slots 412 and 413. When the first IP block 111 is in an idle state, the first IP block 111 does not operate even when the setting level required by the first IP block 111 is not satisfied. Accordingly, performance degradation of the first IP block 111 may not occur. That is, even when the target setting level is selected from among the setting levels of the second and third slots 412 and 413 excluding the first slot 411, optimum or improved levels of shared resources for improving performance of the first to third IP blocks 111 to 113 may be set, thereby improving functionality of the semiconductor system 4 (e.g., improving power consumption efficiency, reducing power consumption without degrading performance of the active IP blocks, etc.).

The ML IP block 520 may perform machine learning based on the first to third idle signals idle_sig1 to idle_sig3 and whether the first to third IP blocks 111 to 113 are actually idle, and may generate the information slot_sel about the selection criterion based on the first to third idle signals idle_sig1 to idle_sig3 by using a trained model. The ML IP block 520 may provide (e.g., output, transmit, etc.) the information slot_sel about the selection criterion to the slot data calculator 420 of the shared logic circuit 400. As described with reference to FIG. 2, the slot data calculator 420 may receive the first to third setting levels from the first to third slots 411 to 413 and select a target setting level from among the first to third setting levels based on the selection criterion.

The trained model may be an artificial intelligence model and/or may be created through machine learning, for example using a learning algorithm. For example, the ML IP block 520 may apply a learning algorithm to learning data that is generated by the ML IP block 520 to create an output algorithm, for example an artificial intelligence model, that indicates information slot_sel about the selection criterion based on respective states of one or more input idle signals. Such learning may be performed, for example, in the semiconductor system 5 itself in which an artificial intelligence model is performed, or may be performed through a separate server (not shown). The learning algorithm may include, for example, supervised learning, unsupervised learning, semi-supervised learning, or reinforcement learning, but is not limited to the above examples. The trained model may include one or a plurality of artificial neural network layers.

As an example, the ML IP block 520 may implement an artificial neural network that is trained on learning data generated by the ML IP block 520 as a set of training data by, for example, a supervised, unsupervised, and/or reinforcement learning model, and wherein the ML IP block 520 may process a feature vector to provide output based upon the training. The learning data may include empirically generated pairs of input data that includes one or more of the first to third idle signals idle_sig1 to idle_sig3 and output data that includes one or more instances of information slot_sel about the selection criterion.

Artificial neural networks may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more of the above, but are not limited to the above examples. The trained model may include, in addition or alternatively, software structures in addition to hardware structures. Alternatively or additionally, the ML IP block 520 may implement other forms of artificial intelligence and/or machine learning based on the learning data, such as, for example, linear and/or logistic regression, statistical clustering, Bayesian classification, decision trees, dimensionality reduction such as principal component analysis, and expert systems; and/or combinations thereof, including ensembles such as random forests. Herein, an artificial neural network may have any structure that is trainable, e.g., with learning data that is used as training data.

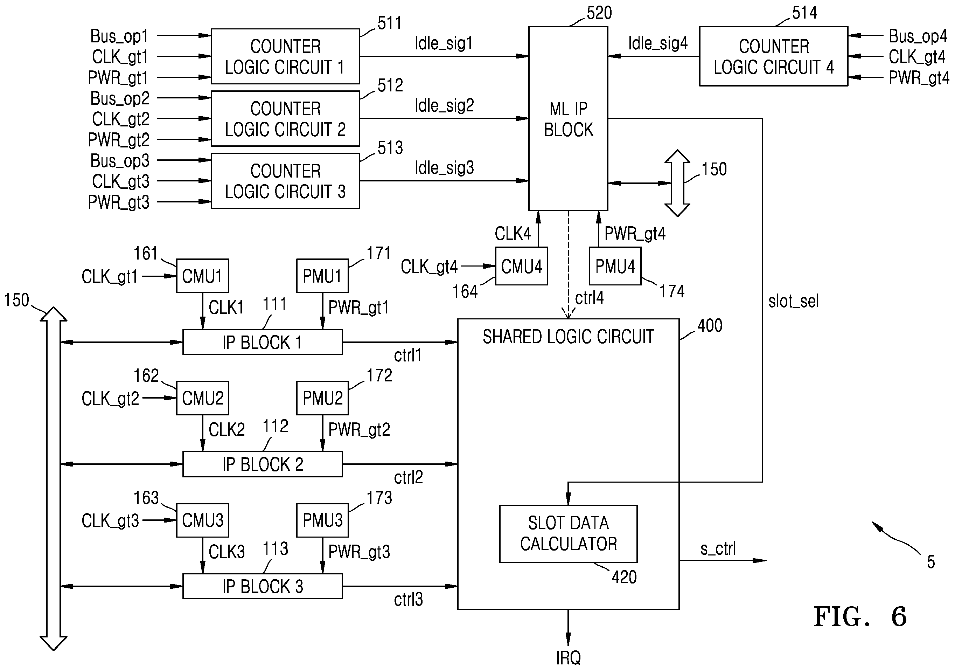

FIG. 6 is a block diagram of a semiconductor system 5 according to some example embodiments.

Details described above with reference to FIGS. 1 to 5 may be omitted.

Referring to FIG. 6, the semiconductor system 5 may include a fourth CMU 164 and a fourth PMU 174.

The fourth CMU 164 may generate a fourth clock signal CLK4 by performing a clock gating operation based on a fourth clock gating signal CLK_gt4, and may provide the fourth clock signal CLK4 to the ML IP block 520.

The fourth PMU 174 may provide a fourth power gating signal PWR_gt4 to the ML IP block 520.

The ML IP block 520 may operate based on the fourth clock signal CLK4 and a power supply voltage VDD provided from the PMIC 200. For example, the ML IP block 520 may perform a fourth bus operation on the bus 150 based on the power supply voltage VDD and the fourth clock signal CLK4, and a fourth bus operation signal Bus_op4 may be activated by the fourth bus operation. The fourth bus operation signal Bus_op4 may be in an active state (e.g., logic high) when the fourth bus operation is performed, and may be in an idle state (e.g., logic low) when the fourth bus operation is not performed. The semiconductor system 5 may further include a bus monitoring circuit that generates the fourth bus operation signal Bus_op4. As shown, the first to third IP blocks 111 may each generate a separate control signal ctrl1 to ctrl3 including respective first to third setting levels and provide the respective control signals ctrl1 to ctrl3 to the shared logic circuit 400. As further shown in FIG. 6, the ML IP block 520 may generate a separate control signal ctrl4 including a separate setting level (e.g., frequency setting level and/or power setting level) and provide the respective control signal ctrl4 to the shared logic circuit 400, where the shared logic circuit 400 may select the target setting level from among the respective setting levels included in control signals ctrl1 to ctrl4 and transmit the target control signal s_ctrl including the target setting level.

The semiconductor system 5 may include a fourth counter logic circuit 514. The fourth counter logic circuit 514 may generate a fourth idle signal idle_sig4 indicating the idle state of the ML IP block 520, based on the fourth bus operation signal Bus_op4, the fourth clock gating signal CLK_gt4, and the fourth power gating signal PWR_gt4. The method of generating the fourth idle state signal idle_sig4 will be described in detail below with reference to FIGS. 11 and 12. The ML IP block 520 may generate information slot_sel about the selection criterion based on at least one of the first to fourth idle state signals idle_sig1 to idle_sig4.

FIG. 7 is a diagram for describing a clock gating cell 600 according to some example embodiments.

Referring to FIG. 7, the clock gating cell 600 may be included in the first CMU 161 of FIG. 3.

The clock gating cell 600 may include a latch circuit 610 and an AND circuit 620.

The latch circuit 610 may receive a first clock gating signal CLK_gt1 and a reference clock signal rCLK. The reference clock signal rCLK may be generated by an oscillator.

The clock gating signal CLK_gt1 may be sampled by the latch circuit 610 in synchronization with a falling edge of the reference clock signal rCLK. That is, the latch circuit 610 may transition a value of a latch output D to logic high by sampling the clock gating signal CLK_gt1 of logic high in synchronization with a falling edge of a first cycle of the reference clock signal rCLK. The latch circuit 610 may transition the value of the latch output D to logic low by sampling the clock gating signal CLK_gt1 of logic low in synchronization with a falling edge of a fourth cycle of the reference clock signal rCLK.

The AND circuit 620 may generate a first clock signal CLK1 by performing an AND operation on the latch output D and the reference clock signal rCLK. The first clock signal CLK1 may have three cycles (second and third cycles).

In a period in which the first clock signal CLK1 does not toggle, some circuits included in the first IP block 111 may not operate. Accordingly, power that is consumed by the first IP block 111 may be reduced, minimized, or inhibited.

The description of the first IP block 111 may be applied to the second and third IP blocks 112 and 113. Furthermore, the description of the first IP block 111 may also be applied to the ML IP block 520.

FIG. 8 is a diagram for describing the power gating operation of the first IP block 111, according to some example embodiments.

Referring to FIG. 8, the first IP block 111 may operate based on the power supply voltage VDD provided from the PMIC 200. Specifically, the first IP block 111 may include at least one core 712 (e.g., processing circuitry, processor core, etc.) that executes instructions. The at least one core 712 may operate based on the power supply voltage VDD.

The first IP block 111 may include a power gating switch 711 connected between a VDD node and the at least one core 712. The power gating switch 711 may be switched based on the first power gating signal PWR_gt1. Specifically, when the first power gating signal PWR_gt1 is at a logic high level, the power gating switch 711 may be turned on to electrically connect the VDD node and the at least one core 712 to each other. When the first power gating signal PWR_gt1 is at a logic low level, the power gating switch 711 may be turned off to electrically disconnect the VDD node and the at least one core 712 from each other.

Power that is consumed by the first IP block 111 may be reduced, minimized, or inhibited by blocking the power supply voltage VDD provided to the at least one core 712 according to the first power gating signal PWR_gt1.

The description of the first IP block 111 may be applied to the second and third IP blocks 112 and 113. Furthermore, the description of the first IP block 111 may also be applied to the ML IP block 520.

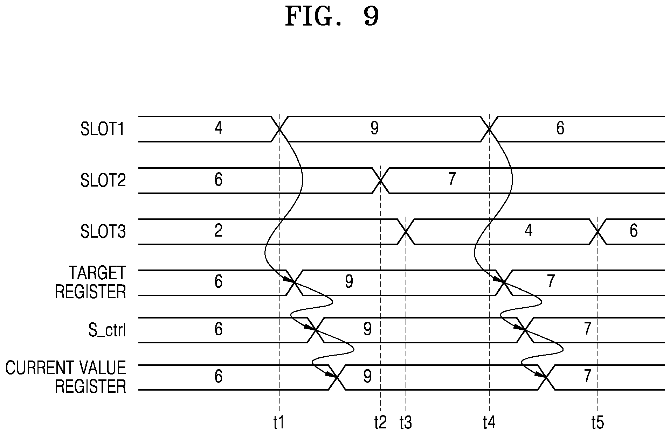

FIG. 9 is a timing diagram for describing the method of selecting the target setting level, according to some example embodiments. FIG. 9 may be described with reference to FIGS. 1 to 8.

Referring to FIG. 9, the setting level initially stored in the first slot 411 may be 4, the setting level stored in the second slot 412 may be 6, and the setting level stored in the third slot 413 may be 2. The setting level may correspond to, for example, the frequency level of the clock signal CLK or the voltage level of the power supply voltage VDD.

According to an example selection criterion in FIG. 9, the highest setting level from among the setting levels stored in the first to third slots 411 to 413 may be selected as the target setting level. Therefore, the setting level 6 of the second slot 412 may be initially stored in the target register 421, the target setting level included in the target control signal s_ctrl may also be 6, and the current level of the shared resource stored in the current value register 440 may also be 6.

At a first time point t1, the setting level of the first slot 411 may increase to 9, and the slot data calculator 420 may store the setting level 9 of the first slot 411 in the target register 421 according to the example selection criterion and provide the setting level 9 to the compare circuit 430.

The compare circuit 430 may compare the setting level 9 with the setting level 6 stored in the current value register 440. Because the setting level 9 is different from the setting level 6 (e.g., in response to a determination that the setting level 9 is different from the setting level 6), the transfer circuit 460 may output the target control signal s_ctrl including the setting level 9. Furthermore, the setting level stored in the current value register 440 may be updated to 9.

At a second time point t2, the setting level of the second slot 412 may increase to 7. However, according to the example selection criterion, the setting level 7 is lower than the current level 9 of the shared resource. Accordingly, the value of the target register 421, the setting level of the target control signal s_ctrl, and the value of the current value register 440 may not change.

Similarly, at a third time point t3, the setting level of the third slot 413 may increase to 4. However, according to the example selection criterion for selecting the highest setting level, the value of the target register 421, the setting level of the target control signal s_ctrl, and the value of the current value register 440 may not change.

At a fourth time point t4, the setting level of the first slot 411 may decrease to 6. The slot data calculator 420 may store the target setting level 7 of the second slot 412 in the target register 421 according to the example selection criterion and provide the target setting level 7 to the compare circuit 430.

The compare circuit 430 may compare the target setting level 7 with the setting level 9 stored in the current value register 440. Because the target setting level 7 is different from the setting level 9, the compare circuit 430 may output the target setting level 7. The transfer circuit 460 may output the target control signal s_ctrl including the setting level 7. Furthermore, the setting level stored in the current value register 440 may be updated to 7.

At a fifth time point t5, the setting level of the third slot 413 may increase to 6. However, according to the example selection criterion, the setting level 6 is lower than the current level 7 of the shared resource. Accordingly, the value of the target register 421, the setting level of the target control signal s_ctrl, and the value of the current value register 440 may not change.

Although the selection criterion in which the highest setting level is selected as the target setting level has been described as an example, example embodiments are not limited thereto. That is, the method described above may also be applied to some example embodiments of a selection criterion in which the lowest setting level, the same setting level as a reference value, and/or the setting level stored in a reference slot are selected as the target setting level.

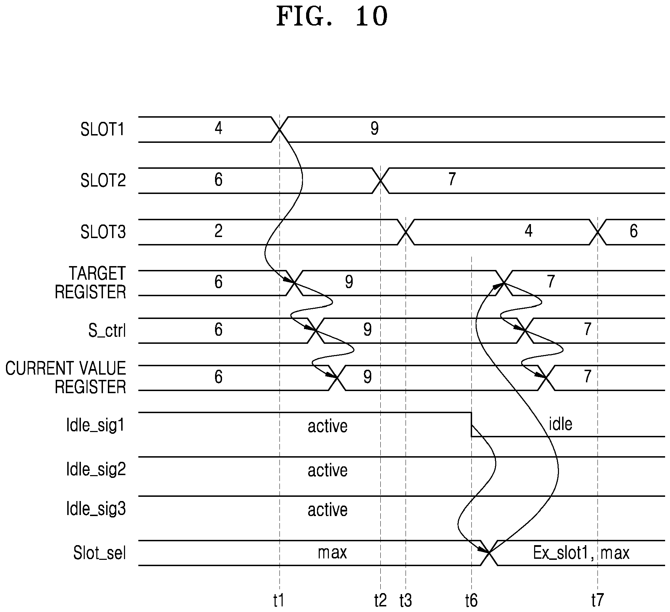

FIG. 10 is a timing diagram for describing the method of selecting the target setting level, according to some example embodiments. FIG. 10 may be described with reference to FIGS. 1 to 9. Details described above with reference to FIG. 9 may be omitted.

Referring to FIG. 10, first to third time points t1 to t3 may be similar to those in the example embodiments shown in FIG. 9. Up to the first to the third time points t1 to t3, the first to third idle signals idle_sig1 to idle_sig3 may be all in an active state. Accordingly, information slot_sel about the selection criterion may be set to max so that the highest setting level from among the setting levels stored in the first to third slots 411 to 413 is selected as the target setting level.

At a sixth time point t6, the first idle signal idle_sig1 may transition to an idle state. That is, because the first IP block 111 is in an idle state, performance of the first IP block 111 may not degrade even when the setting level requested by the first IP block 111 is not satisfied.

Accordingly, the ML IP block 520 may set information slot_sel about the selection criterion to Ex_slot1 so that the target setting level is selected from among the setting levels stored in the slots other than the first slot 411. Furthermore, the ML IP block 520 may set information slot_sel about the selection criterion to max so that the highest setting level, the lowest setting level, or the same setting level as the reference value is selected as the target setting level from among the setting levels stored in the slots other than the first slot 411.

Accordingly, the highest setting level 7 from among the setting levels 7 and 4 stored in the second and third slots 412 and 413 may be stored in the target register 421, may be included in the target control signal s_ctrl, and may be stored in the current value register 440.

At a seventh time point t7, the setting level of the third slot 413 may increase to 6. However, according to the example selection criterion, the setting level 6 is lower than the current level 7 of the shared resource. Accordingly, the value of the target register 421, the setting level of the target control signal s_ctrl, and the value of the current value register 440 may not change.

Although the selection criterion in which the highest setting level is selected as the target setting level from among the setting levels stored in the slots other than the reference slot has been described as an example, example embodiments are not limited thereto. That is, the method described above may also be applied to some example embodiments of a selection criterion in which the lowest setting level, the same setting level as the reference value, and the setting level stored in the reference slot are selected as the target setting level.

FIG. 11 is a timing diagram for describing the method of generating the first idle signal, according to some example embodiments. FIG. 11 may be described with reference to FIG. 6.

Referring to FIG. 11, when the logic level of at least one of the first bus operation signal Bus_op1, the first clock gating signal CLK_gt1, or the first power gating signal PWR_gt1 is high, the logic level of the first idle signal idle_sig1 is high.

That is, the first counter logic circuit 511 of FIG. 6 may include an OR circuit. The OR circuit may generate the first idle signal idle_sig1 by performing an OR operation on the first bus operation signal Bus_op1, the first clock gating signal CLK_gt1, and the first power gating signal PWR_gt1.

The description of the first idle signal idle_sig1 may also be applied to the second and third idle signals idle_sig2 and idle_sig3.

FIG. 12 is a timing diagram for describing the method of generating the first idle signal, according to some example embodiments. FIG. 12 may be described with reference to FIG. 6.

Referring to FIG. 12, when the logic level of at least one of the first bus operation signal Bus_op1 or the first clock gating signal CLK_gt1 is high, the logic level of the first idle signal idle_sig1 is high.

That is, the first counter logic circuit 511 of FIG. 6 may include an OR circuit. The OR circuit may generate the first idle signal idle_sig1 by performing an OR operation on the first bus operation signal Bus_op1 and the first clock gating signal CLK_gt1.

Examples are not limited thereto. The first idle signal idle_sig1 indicating the idle state of the first IP block 111 may be generated based on at least one of various pieces of information about the first IP block 111, including the first bus operation signal Bus_op1, the first clock gating signal CLK_gt1, and the first power gating signal PWR_gt1.

The description of the first idle signal idle_sig1 may also be applied to the second and third idle signals idle_sig2 and idle_sig3.

As described herein, any devices, systems, units, blocks, circuits, controllers, processors, and/or portions thereof according to any of the example embodiments (including, for example, the semiconductor system 1, the PMIC 200, the memory 300, the PMU 132, the first shared logic circuit 141, the first to third IP blocks 111, 112, and 113, the second shared logic circuit 142, the CMU 131, the memory controller 120, the bus 150, the shared logic circuit 400, the first to third slots 411, 412, and 413, the slot data calculator 420, the target register 421, the compare circuit 430, the current value register 440, the trace circuit 450, the transfer circuit 460, the first to third CMUs 161, 162, and 163, the first to third PMUs 171, 172, and 173, the semiconductor system 4, the first to third counter logic circuits 511, 512, and 513, the ML IP block 520, the semiconductor system 5, the fourth counter logic circuit 514, the fourth CMU 164, the fourth PMU 174, the clock gating cell 600, the latch circuit 610, the AND circuit 620, the at least one core 712, the power gating switch 711, any portion thereof, or the like) may include, may be included in, and/or may be implemented by one or more instances of processing circuitry such as hardware including logic circuits; a hardware/software combination such as a processor executing software; or any combination thereof. For example, the processing circuitry more specifically may include, but is not limited to, a central processing unit (CPU), an arithmetic logic unit (ALU), a graphics processing unit (GPU), an application processor (AP), a digital signal processor (DSP), a microcomputer, a field programmable gate array (FPGA), and programmable logic unit, a microprocessor, application-specific integrated circuit (ASIC), a neural network processing unit (NPU), an Electronic Control Unit (ECU), an Image Signal Processor (ISP), and the like. In some example embodiments, the processing circuitry may include a non-transitory computer readable storage device (e.g., a memory), for example a solidstate drive memory device, storing a program of instructions, and a processor (e.g., CPU) configured to execute the program of instructions to implement the functionality and/or methods performed by some or all of any devices, systems, units, blocks, circuits, controllers, processors, and/or portions thereof according to any of the example embodiments.

While the inventive concepts have been particularly shown and described with reference to embodiments thereof, it will be understood that various changes in form and details may be made therein without departing from the scope of the following claims.

## Claims

1. A semiconductor system, comprising:
a shared resource management circuit configured to provide a shared resource having a level adjusted according to a setting level;
a plurality of intellectual property (IP) blocks, each of the plurality of IP blocks including at least one core configured to execute an instruction, the plurality of IP blocks configured to generate separate, respective control signals of a plurality of control signals, the plurality of control signals including separate, respective setting levels of a plurality of setting levels; and
a logic circuit including a plurality of slots configured to respectively store the plurality of setting levels respectively included in the plurality of control signals respectively received from the plurality of IP blocks, the logic circuit configured to
select a target setting level from among the plurality of setting levels, and transmit, to the shared resource management circuit, a target control signal including the target setting level, to cause the shared resource management circuit to provide the shared resource adjusted according to the target setting level.

2. The semiconductor system of claim 1, wherein the shared resource management circuit comprises:
a power management integrated circuit (PMIC) configured to generate a power supply voltage included in the shared resource; and
a power management unit (PMU) configured to control the PMIC so that the power supply voltage has the target setting level.

3. The semiconductor system of claim 1 or claim 2, wherein the shared resource management circuit comprises a clock management unit (CMU) configured to control a level of a clock signal included in the shared resource to the target setting level.

4. The semiconductor system of claim 3, further comprising:
a memory; and
a memory controller configured to process, based on the clock signal, requests received from the plurality of IP blocks to access the memory.

5. The semiconductor system of any preceding claim, wherein the logic circuit is further configured to compare the target setting level with a current setting level of the shared resource and output the target control signal to the shared resource management circuit according to a comparison result.

6. The semiconductor system of any preceding claim, wherein the logic circuit comprises a trace circuit configured to store a log for the target setting level whenever the target control signal is transmitted to the shared resource management circuit.

7. The semiconductor system of any preceding claim, wherein the logic circuit is further configured to generate an interrupt signal to limit a control authority for the shared resource management circuit to the logic circuit when the target control signal is transmitted to the shared resource management circuit.

8. The semiconductor system of any preceding claim, wherein the logic circuit is further configured to select, according to a selection criterion, a particular setting level as the target setting level, the particular setting level being one of a highest setting level from among the plurality of setting levels, a lowest setting level from among the plurality of setting levels, a setting level having a reference value from among the plurality of setting levels, a setting level stored in a reference slot from among the plurality of slots, or a setting level stored in one or more slots other than the reference slot from among the plurality of slots.

9. The semiconductor system of claim 8, further comprising a machine learning (ML) IP block configured to provide information associated with the selection criterion to the logic circuit.

10. The semiconductor system of claim 9, further comprising counter logic circuits configured to generate, separate, respective idle signals of a plurality of idle signals for the plurality of IP blocks, each separate counter logic circuit configured to generate a separate idle signal for a separate IP block of the plurality of IP blocks based on at least one of
a clock gating signal associated with clock signals provided to the separate IP block,
a power gating signal associated with power supply voltages provided to the separate IP block, or
a bus operation signal associated with the separate IP block.

11. The semiconductor system of claim 10, wherein the ML IP block is further configured to generate the information associated with the selection criterion based on at least one idle signal of the plurality of idle signals, based on using a machine learning model trained based on the selection criterion and the plurality of idle signals.

12. The semiconductor system of any preceding claim, wherein the logic circuit comprises:
a slot data calculator configured to select the target setting level from among the plurality of setting levels;
a register configured to store a current setting level of the shared resource;
a compare circuit configured to compare the target setting level with the current setting level, output the target setting level according to a comparison result, and update the current setting level stored in the register to the target setting level;
a trace circuit configured to store information associated with a log for a setting level of the shared resource; and
a transfer circuit configured to transmit the target control signal including the target setting level to the shared resource management circuit.

13. A semiconductor system, comprising:
a shared resource management circuit configured to provide a shared resource including a clock signal or a power supply voltage, the shared resource adjusted according to a target setting level;
a first intellectual property (IP) block configured to
perform a first bus operation on a bus in synchronization with a first clock signal gated based on a first clock gating signal,
perform power gating on the power supply voltage according to a first power gating signal, and
generate a first control signal including a first setting level;
a second IP block configured to
perform a second bus operation on the bus in synchronization with a second clock signal gated based on a second clock gating signal,
perform power gating on the power supply voltage according to a second power gating signal, and
generate a second control signal including a second setting level;
a third IP block configured to
perform a third bus operation on the bus in synchronization with a third clock signal gated based on a third clock gating signal,
perform power gating on the power supply voltage according to a third power gating signal, and
generate a third control signal including a third setting level; and
a logic circuit configured to
select, according to a selection criterion, the target setting level from among the first to third setting levels included in the first to third control signals, the first to third setting levels respectively stored in first to third slots, and
transmit a target control signal including the target setting level to the shared resource management circuit, to cause the shared resource management circuit to provide the shared resource adjusted according to the target setting level,
wherein the third IP block is further configured to generate information associated with the selection criterion based on idle information associated with the first to third IP blocks that are generated based on at least one of signals for the first to third bus operations, the first to third clock gating signals, or the first to third power gating signals.

14. The semiconductor system of claim 13, wherein the shared resource management circuit comprises:
a power management integrated circuit (PMIC) configured to generate the power supply voltage; and
a power management unit (PMU) configured to control the PMIC so that the power supply voltage has the target setting level.

15. The semiconductor system of claim 13 or claim 14, wherein the shared resource management circuit comprises a clock management unit (CMU) configured to generate the clock signal so that the clock signal has the target setting level.
